# FASCICULE DE BREVET EUROPEEN

(11) **EP 3 936 738 B1**
(45) Date de publication et mention de la délivrance du brevet: **15.02.2023**
(21) Numéro de dépôt: 21197589.1
(22) Date de dépôt: 13.07.2021
(51) Int. Cl.: F16G 11/02, E01D 22/00, F16G 11/04, E01D 19/16

(54) **DÉTENSION CÂBLE**
SPANNUNGSFREIMACHEN VON KABELN
CABLE DRAIN WIRE

(30) Priorité: 15.07.2020 FR 2007394; 29.01.2021 FR 2100856
(43) Date de publication de la demande: 12.01.2022
(62) Demande divisionnaire de: 21740572.9
(73) Titulaire: Soletanche Freyssinet, 92500 Rueil Malmaison (FR)
(72) Inventeur: ZIVANOVIC, Ivica, GOUVIEUX (FR); LADRET, Patrick, TORRELODONES (ES); TROTIN, Nicolas, TORRELODONES (ES)
(74) Mandataire: Nony

(56) Documents cités:
- EP-A1- 1 887 139
- ES-A1- 2 735 145

## Description

### Domaine technique

La présente invention concerne le domaine de la maintenance ou de la réparation de structures civiles telles que des ouvrages d'art.

L'invention concerne plus particulièrement la détension et dépose de câbles de structure (en béton, en charpente métallique ou en ossature bois) extérieurs à celle-ci, tels que des câbles de précontrainte extérieure, des haubans ou des suspentes de pont.

### Technique antérieure

De tels câbles sont fréquemment constitués d'un faisceau d'armatures (fils, torons ou barres, le plus souvent en acier) protégés par un matériau cimentaire tel qu'un coulis, ayant fait prise après injection dans une gaine enveloppe du câble et adhérant aux armatures.

Ces câbles sont soumis au sein de l'ouvrage à une tension mécanique élevée et ne peuvent être sectionnés sans précaution particulière.

Le brevet EP1887139 décrit un dispositif de pontage utilisé pour détendre localement un câble tel qu'un hauban avant de le sectionner et le déposer. Ce dispositif comporte deux colliers aptes à être positionnés autour du câble de façon à assurer un contact sans glissement avec celui-ci. Au moins deux barres de traction (encore appelées barres relais) relient lesdits colliers et des moyens de réglage de l'effort de traction transitant dans les barres sont prévus. Dans ce brevet, la manière de réaliser les colliers et les liaisons avec les barres n'est décrite que succinctement.

Le non-glissement de chacun des colliers du dispositif de pontage requiert un serrage transversal suffisant pour mobiliser frottement et cisaillement aux différentes interfaces entre armatures et colliers, et en particulier entre les armatures et le matériau cimentaire les enveloppant. Ce matériau cimentaire est susceptible d'être dégradé, et ainsi d'affecter négativement la qualité de l'interface correspondante.

Il est connu de boucharder le matériau cimentaire pour éliminer les portions ne tenant plus et de disposer autour de celui-ci un matériau de calage tel qu'un mortier dit « gras », relativement visqueux. Ce mortier est versé dans le demi-collier inférieur et sur le dessus du câble, et les deux demi-colliers sont rapprochés l'un de l'autre. La viscosité relativement élevée du mortier lui permet de rester en place jusqu'à l'étape de rapprochement des demi-colliers, qui chasse le mortier en excès.

Un tel dispositif convient tant que la force de retenue exercée par les colliers est suffisante, ce qui est généralement le cas pour les haubans.

Or, les haubans sont généralement tendus au maximum à environ 50% de leur capacité avant rupture, tandis que les câbles de précontrainte extérieure le sont souvent à une tension supérieure, qui peut atteindre 80%.

De plus, les armatures peuvent également être plus lisses, ce qui accroît le risque de glissement entre l'armature et le matériau cimentaire.

Le brevet ES2735145 décrit un procédé et un dispositif de pontage destinés à la détension d'un câble de structure. Le dispositif comporte un chemisage permanent qui est mis en place autour des armatures de chacun des deux segments du câble sur lequel le dispositif est destiné à s'ancrer. Ces chemisages sont mis en place après mise à nu complète des armatures, et servent de coffrages perdus à un matériau de remplissage. Deux colliers de forme allongée selon l'axe longitudinal du câble sont serrés chacun sur un chemisage correspondant, après prise du matériau de remplissage. Deux structures de forme allongée transversalement à l'axe longitudinal du câble, en forme de joug, distinctes des colliers sont disposées chacune à l'extrémité d'un collier respectif, pour servir d'appui axial à celui-ci, ces structures en forme de joug étant reliées latéralement par deux barres de traction. Chaque structure en forme de joug comporte deux poutres chevêtres qui sont assemblées par boulonnage autour du câble et des deux barres.

Dans un tel dispositif, l'entre-axe entre le câble et chaque barre de traction est relativement important, ce qui soumet les poutres chevêtres à des efforts de flexion importants. Ces efforts peuvent limiter la robustesse du système dans la mesure où un déséquilibre de ceux-ci peut conduire à un comportement instable et/ou exposer le dispositif à des contraintes mécaniques excessives, pouvant conduire à un glissement sur le câble ou à sa rupture. Un tel dispositif s'avère en outre relativement encombrant, et difficile à installer dans certaines configurations de l'ouvrage à réparer.

### Exposé de l'invention

L'invention vise à remédier aux inconvénients des dispositifs de pontage connus, et notamment à bénéficier d'un système de pontage à la fois facile à installer et offrant une sécurité accrue.

L'invention vise notamment à perfectionner encore le dispositif de pontage décrit dans le brevet EP1887139 et disposer d'une solution permettant d'accroître l'effort de serrage afin de détendre localement des câbles de structure soumis à une tension relativement élevée, notamment supérieure à celle des haubans, tels que des câbles de précontrainte extérieure.

### Résumé de l'invention

L'invention a ainsi pour objet selon un premier de ses aspects, un dispositif de pontage destiné à détendre localement un câble de structure avant son sectionnement, comportant :
- Au moins deux colliers de serrage à disposer sur ledit câble,
- au moins un orifice d'injection d'un matériau de calage dans un espace s'étendant entre chaque collier et le câble avant le serrage du collier,
- un système de liaison entre les deux colliers, permettant de régler l'écartement entre les colliers afin de reprendre la tension du câble et permettre son sectionnement dans une zone détendue située entre les deux colliers.

Grâce à ce premier aspect de l'invention, un matériau de calage relativement fluide peut être utilisé, ce qui permet d'utiliser des colliers aussi longs que souhaitable pour disposer de la force de retenue nécessaire. Ainsi, le dispositif peut être utilisé pour tout type de câble de structure y compris des câbles de précontrainte extérieure, soumis à une tension importante.

De plus, la fluidité du matériau de calage lui permet de mieux remplir les fissures éventuelles du matériau cimentaire enveloppant les armatures du câble qu'un mortier gras, et la qualité des interfaces mobilisées lors de la reprise de l'effort de traction est améliorée.

L'invention selon ce premier aspect permet ainsi un serrage de chaque collier autour du segment de câble concerné de bonne qualité, permettant d'offrir une sécurité augmentée s'agissant du non-glissement lors du pontage, de la découpe et de la détension du câble.

L'invention a encore pour objet selon un deuxième de ses aspects, qui peut être indépendant du premier ou se combiner à celui-ci, un système de pontage destiné à détendre localement un câble de structure avant son sectionnement, comportant un dispositif de pontage comportant :
- Deux colliers à disposer sur ledit câble, chaque collier étant formé de deux demi-colliers aptes à être positionnés autour du câble, chaque demi-collier étant de forme allongée selon l'axe longitudinal du câble et réalisé avec un corps définissant une cavité sensiblement hémicylindrique,
- des éléments de traction s'étendant entre les colliers,
- des moyens de réglage de l'effort de traction transitant dans les éléments de traction, système caractérisé par le fait que chacun d'au moins deux demi-colliers comporte, de façon monobloc avec celui-ci :
- des renforts longitudinaux s'étendant le long dudit corps sur au moins une partie de la longueur de celui-ci,
- des ancrages s'étendant entre ces renforts longitudinaux,
- des ancrages situés dans la continuité axiale des renforts longitudinaux,
- la transmission de l'effort des éléments de traction aux colliers s'effectuant *via* lesdits ancrages.

Le système de pontage peut comprendre des moyens de surveillance de l'effort transitant dans les éléments de traction. Ces derniers sont en nombre supérieur à deux.

Par « monobloc » il faut comprendre que chaque demi-collier forme un ensemble solide d'un seul tenant. Chaque demi-collier peut être fabriqué à partir de plusieurs pièces soudées ensemble, ou par usinage d'une ébauche, voire par fonderie. De préférence, les demi-colliers sont mécanosoudés et fabriqués en acier, de préférence en acier ductile de limite élastique fy supérieure à 300 MPa, et de limite à rupture supérieure à 400 MPa, par exemple de l'acier S355 (acier ductile de limite élastique fy=355MPa, de limite à rupture 510MPa). D'autres nuances plus résistantes telles que l'acier S460 sont possibles, la nuance S355 restant un bon compromis résistance mécanique/coût. Les ancrages peuvent ainsi être soudés sur les renforts longitudinaux et/ou sur le corps du demi-collier.

La cavité sensiblement hémicylindrique du corps est adaptée au positionnement du demi-collier sur le câble, éventuellement revêtu d'un chemisage comme détaillé plus loin. Le corps peut présenter une forme sensiblement demi-circulaire en section transversale, ou être de forme plus massive. Le corps peut être réalisé avec des brides de serrage, s'étendant le long de celui-ci, sur ses côtés.

La réalisation de chaque demi-collier, associant un corps, des brides de serrage éventuelles, des renforts longitudinaux et des ancrages situés entre eux et/ou en appui axial sur ceux-ci, à proximité du corps, sous la forme d'un ensemble solide monobloc, présente de nombreux avantages.

Tout d'abord, le fait de réaliser les ancrages de façon monobloc avec les demi-colliers permet d'éviter d'utiliser une structure en forme de joug comme dans l'art antérieur précité.

La présence d'ancrages entre les renforts longitudinaux ou en appui axial sur ceux-ci permet de réduire l'excentricité des éléments de traction par rapport à l'axe du câble. Cela diminue les efforts de flexion induits qu'il est nécessaire d'équilibrer. En diminuant ces efforts de flexion induits par les éléments de traction, grâce à la proximité des ancrages de l'axe longitudinal du câble, on améliore la robustesse du système.

De préférence, la valeur de l'entre-axe entre l'axe du corps définissant la cavité sensiblement hémicylindrique (confondu avec l'axe du câble de structure) et l'axe de chaque élément de traction est ainsi inférieure ou égale à 2,5 fois le diamètre extérieur D du câble (hors gaine), mieux inférieure ou égale à 2 fois ce diamètre extérieur, plus préférentiellement à 1,5 ou 1,2 fois ce diamètre extérieur.

De plus, l'invention selon ce deuxième aspect permet de gagner en compacité et de limiter l'encombrement du dispositif, à la fois axialement et transversalement au câble. Ainsi, le système selon cet aspect de l'invention peut être facilement mis en oeuvre sur un segment du câble se situant à proximité immédiate d'un élément de la structure (poutre, voile, dalle, etc.) ou à proximité d'un ou de plusieurs câbles voisins, par exemple parmi un faisceau de câbles de précontrainte extérieure dans un tablier de pont. Dans ces configurations, il est avantageux d'avoir un dispositif de pontage d'encombrement transversal limité autour de l'axe du câble.

En outre, la sécurité du dispositif est améliorée en cas de défaillance d'un élément de traction, le recours à trois ou quatre éléments de traction offrant une certaine redondance permettant de s'accommoder de la défaillance de l'un d'eux.

Tous les demi-colliers sont de préférence identiques, ce qui simplifie leur utilisation et leur fabrication.

De préférence, le dispositif de pontage comporte à la fois des ancrages s'étendant entre les renforts et fixés à ceux-ci, dits « ancrages de reprise », et des ancrages venant dans la continuité axiale des renforts, dits « ancrages d'appui ».

Les ancrages d'appui peuvent servir de butée, du côté d'une extrémité dite « active » du système, à des mécanismes de mise en tension des éléments de traction, tels que des vérins, tandis que les ancrages de reprise peuvent, du côté de cette même extrémité active, servir à reprendre les efforts quand les mécanismes de mise en tension sont relâchés.

Les ancrages peuvent se présenter sous la forme de plaques soudées aux renforts longitudinaux et/ou au corps des demi-colliers, de préférence à la fois au corps et aux renforts longitudinaux.

Chaque demi-collier peut comporter deux paires de nervures de renfort longitudinales, les nervures de chaque paire étant parallèles entre elles. Les nervures d'une première paire sont par exemple orientées à 45° du plan de serrage des colliers, et les nervure de la deuxième paire à 45° également de ce plan de serrage mais à 90° de la première paire.

Au moins certains ancrages peuvent être soudés aux nervures de renfort longitudinales, entre celles-ci. Ces nervures peuvent être doublées par des plaques de renfort en arrière de ces ancrages, ces plaques de renfort s'étendant de préférence sur les faces en regard des nervures d'une même paire. Les ancrages formant paliers de reprise peuvent reposer sur ces plaques de renfort, lesquelles contribuent ainsi à la reprise des efforts axiaux.

Chaque demi-collier peut comporter une partie avant dépourvue de renforts longitudinaux, et une partie arrière le long de laquelle lesdits renforts s'étendent. La partie avant de chaque demi-collier est dirigée vers la zone de découpe du câble. La partie avant peut ne comporter que le corps définissant la cavité sensiblement hémicylindrique et les brides de serrage, ainsi que des nervures de rigidification transversales (encore appelées raidisseurs transversaux) orientées perpendiculairement à l'axe longitudinal du demi-collier et se raccordant à la fois à la bride correspondante et au corps, notamment étant soudées à ceux-ci. La partie arrière comporte les renforts longitudinaux et les ancrages en plus des brides et des nervures de rigidification transversales.

Les renforts longitudinaux peuvent comporter des nervures qui sont orientées sensiblement à 45° par rapport au plan de serrage du collier, comme mentionné plus haut. Les brides peuvent alors s'élargir au niveau de la partie arrière, de façon à laisser un accès aisé aux boulons de serrage compte-tenu de la présence des renforts longitudinaux au-dessus des brides.

Les éléments de traction du dispositif de pontage se présentent de préférence sous la forme de barres de traction, encore appelées « barres de relais de traction » ou « barres relais ».

Les ancrages peuvent ainsi comporter des plaques de reprise s'étendant perpendiculairement à l'axe longitudinal du collier et se raccordant aux renforts longitudinaux, pour servir d'appui à des écrous de reprise montés sur ces barres de traction.

Les éléments de traction du dispositif de pontage présentent de préférence chacun une contrainte de rupture fRG supérieure ou égale à 1000 MPa. Les éléments de traction sont par exemple des barres de précontrainte, de contrainte de rupture fRG=1035MPa.

Les barres de traction ont par exemple un diamètre compris entre 25 et 75mm, étant par exemple des barres de diamètre 63.5mm, l'effort mobilisé restant de préférence en deçà de 60% de leur capacité (0,6^{∗}3167mm^{2∗} 1035 MPa soit 1966kN par barre de diamètre égal à 63.5)

Les mécanismes de mise en tension peuvent être des vérins ayant une capacité au moins égale à 60% de la capacité des éléments de traction.

Les éléments de traction sont de préférence des barres de traction, comme indiqué ci-dessus, et les mécanismes de mise en tension sont de préférence des vérins creux, à travers lesquels les barres de traction s'étendent.

Les vérins et les barres de traction associées, en nombre égal, sont de préférence distribués avec un agencement sensiblement symétrique autour de l'axe du câble.

Les vérins ont par exemple une capacité minimale de 1966kN, et sont par exemple des vérins de capacité 2300kN, offrant une certaine marge de sécurité.

La différence entre les diamètres extérieur et intérieur de tels vérins est par exemple supérieure ou égale à 180mm, avec par exemple un diamètre extérieur de 270mm et un diamètre intérieur de 73mm.

L'installation du dispositif de pontage requiert une étape préalable de préparation du segment du câble où se situe la zone de découpe, ce segment devant être rendu apte à recevoir le dispositif de pontage, c'est-à-dire apte au serrage transversal des colliers afin de résister aux efforts tangents (de glissement) induits par ceux-ci lors de la mise en tension du dispositif.

Sauf cas particulier (celui où la gaine du câble participerait à l'effort de tension permanent dans le câble), la première étape consiste à découper et à retirer l'enveloppe extérieure du câble (gaine en acier, PEHD ou autre) sur le segment concerné.

La préparation de la section du câble consiste alors à reconstituer des sections et surfaces, notamment autour des armatures et du matériau protecteur solide intégrant le faisceau, aptes à ancrer les deux colliers du dispositif par serrage transversal. La reconstitution de ces sections s'effectue par coulage ou injection d'un matériau de remplissage compatible avec le matériau protecteur des armatures, par exemple un coulis cimentaire ou une résine polymère durcissable.

Ce coulage ou injection peut s'effectuer dans chaque collier du dispositif, avant serrage, grâce notamment à la présence d'au moins un orifice prévu à cet effet, par exemple grâce à la présence d'au moins un orifice d'injection et d'au moins un évent sur chaque demi-collier, débouchant de préférence sur la surface intérieure du corps définissant la cavité sensiblement hémicylindrique. Dans une variante, le coulage ou l'injection s'effectue dans un chemisage permanent servant de coffrage perdu ou dans un coffrage tubulaire amovible, le segment de câble ainsi préparé étant apte à recevoir un collier du dispositif. Les demi-colliers peuvent être dépourvus chacun d'orifice d'injection d'un matériau de calage et/ou d'évent, débouchant sur la surface intérieure du corps.

Ainsi, dans un premier exemple de mise en oeuvre de l'invention, le système comporte des cales pour ménager un espace entre le câble et chaque demi-collier, et l'un au moins des demi-colliers comporte de préférence au moins un orifice d'injection d'un matériau de calage autour du câble dans cet espace. Les colliers peuvent être prépositionnés sur le câble, et le matériau de calage injecté dans cette configuration.

Dans un deuxième exemple de mise en oeuvre de l'invention, le système comporte un chemisage adapté à être mis en place autour du câble avant la pose des colliers, chaque collier étant configuré pour être serré sur le chemisage sous-jacent, la force de traction exercée par le collier étant transmise au câble *via* ce chemisage. Le système peut comporter des cales pour ménager un espace entre le câble et le chemisage en vue de l'injection dans cet espace, autour du câble, d'un matériau de calage, le chemisage jouant le rôle d'un coffrage perdu pour le matériau de calage. Le chemisage peut comporter deux demi-coquilles sensiblement hémicylindriques, et des joints longitudinaux à la jonction entre les demi-coquilles. Chaque demi-coquille peut présenter une surface extérieure et/ou une surface intérieure rugueuse, étant de préférence métallique. La rugosité de la surface extérieure et/ou intérieure du chemisage améliore la transmission des efforts sans glissement des colliers sur le chemisage. La rugosité de la surface intérieure peut être améliorée le cas échéant avec des cordons de soudure.

Dans un troisième exemple de mise en oeuvre de l'invention, le système de pontage comporte un coffrage amovible configuré pour être mis en place autour du câble afin d'injecter autour de celui-ci un matériau de calage, chaque collier étant adapté à être mis en place sur le câble là où le matériau de calage a été injecté, après retrait du coffrage amovible. Ce dernier peut comporter des secteurs, notamment au nombre de trois, et entre ceux-ci des joints longitudinaux. Dans les deux derniers cas, il n'est normalement pas nécessaire d'injecter un matériau de calage entre les colliers et le chemisage ou la section décoffrée, mais une telle injection n'est pas exclue pour améliorer encore la reprise des efforts.

L'invention a encore pour objet un procédé pour reprendre localement la tension d'un câble de structure en vue de son sectionnement, en utilisant le système de pontage selon l'invention, comportant les étapes consistant à :
- Préparer la surface du câble, notamment en retirant sa gaine, en retirant les épaufrures et en le bouchardant, puis :
   a)
      - mettre en place les colliers autour du câble,
      - injecter un matériau de calage dans les espaces formés entre les colliers et le câble, ou
   b)
      - mettre en place un chemisage autour du câble au niveau de chaque segment de celui-ci destiné à recevoir un collier de serrage,
      - injecter un matériau de calage dans un espace formé entre le chemisage et le câble,
      - mettre en place chaque collier autour du chemisage correspondant, ou
   c)
      - mettre en place un coffrage amovible autour du câble au niveau de chaque segment de celui-ci destiné à recevoir un collier de serrage,
      - injecter un matériau de calage dans un espace formé entre le câble et le coffrage,
      - retirer le coffrage,
      - mettre en place chaque collier sur la portion ainsi décoffrée correspondante,
         puis mettre sous tension les éléments de traction s'étendant entre les colliers pour reprendre la tension du câble.

La reconstitution des sections et surfaces aptes à recevoir les colliers du dispositif peut nécessiter des précautions accrues qui justifient le recours à un chemisage permanent (étapes b) ci-dessus) ou à un coffrage amovible (étapes c) ci-dessus) pour la préparation de ces segments. De plus, le recours à un chemisage permanent ou à un coffrage amovible peut permettre un gain de temps en effectuant ces travaux préparatoires hors du chemin critique de mise en oeuvre du dispositif.

Le matériau de calage, notamment lorsqu'il s'agit d'un coulis cimentaire, peut atteindre une résistance minimale en compression fck d'au moins 40MPa à 2 jours, et peut atteindre 100MPa et plus à 28 jours.

L'invention a encore pour objet un procédé de découpe d'un câble de structure, comportant les étapes consistant à :
- Détendre localement le câble par la mise en oeuvre du procédé de détension ci-dessus,
- découper le câble dans la zone détendue.

L'invention est applicable à tout type de câble, notamment en acier : câbles clos, hélicoïdaux ou à faisceau d'armatures parallèles (fils, torons, barres).

L'invention a encore pour objet, selon un autre de ses aspects, indépendamment ou en combinaison avec ce qui précède, un dispositif de pontage destiné à détendre localement un câble de structure avant son sectionnement, comportant :
- Deux colliers à disposer sur ledit câble, chaque collier étant formé de deux demi-colliers aptes à être disposés autour du câble, chaque demi-collier comportant un corps (encore appelé « mordache ») de forme allongée selon l'axe longitudinal du câble et réalisé de façon monobloc avec des ancrages,
- au moins deux éléments de traction reliant les colliers, la transmission de l'effort des éléments de traction aux colliers s'effectuant *via* lesdits ancrages.

Ce dispositif peut présenter l'une quelconque des caractéristiques du système définies plus haut. En particulier, la valeur de l'entre-axe entre l'axe du câble de structure et l'axe de chaque élément de traction peut ainsi être inférieure ou égale à 2,5 fois le diamètre extérieur D du câble (hors gaine), mieux inférieure ou égale à 2 fois ce diamètre extérieur, encore mieux à 1,5 ou 1,2 fois ce diamètre extérieur.

De même, ce dispositif peut être mis en oeuvre en suivant les étapes a), b) ou c) de préparation du câble, définies plus haut.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel :
[Fig 1] La figure 1 est une vue schématique de côté d'un exemple de dispositif de pontage selon l'invention,
[Fig 2] la figure 2 représente de manière partielle et schématique, en perspective, la partie dite « active » du dispositif de la figure 1,
[Fig 3] la figure 3 représente isolément un demi-collier du dispositif de pontage de la figure 1 (celui de l'extrémité dite active),
[Fig 4] la figure 4 représente isolément en section transversale un câble à sectionner, après retrait des épaufrures et bouchardage,
[Fig 5] la figure 5 est une vue analogue à la figure 4 illustrant le positionnement des cales sur le câble,
[Fig 6] la figure 6 est une coupe transversale du dispositif de pontage en place sur le câble, selon un premier exemple de mise en oeuvre de l'invention,
[Fig 7] la figure 7 est une section illustrant la mise en place d'un chemisage sur le câble, conformément à un deuxième exemple de mise en oeuvre de l'invention,
[Fig 8] la figure 8 est une vue analogue à la figure 7 après fermeture du chemisage et injection d'un matériau de calage dans celui-ci,
[Fig 9] la figure 9 est une vue analogue à la figure 6, dans ce deuxième exemple de mise en oeuvre de l'invention,
[Fig 10] la figure 10 est une section illustrant l'utilisation d'un coffrage amovible pour couler le matériau de calage, selon un troisième exemple de mise en oeuvre de l'invention,
[Fig 11] la figure 11 illustre le retrait du coffrage de la figure 10,
[Fig 12] la figure 12 est une vue analogue à la figure 6, illustrant l'utilisation1 du dispositif de pontage dans ce troisième exemple de mise en oeuvre de l'invention,
[Fig 13] la figure 13 illustre la découpe du câble, et
[Fig 14] la figure 14 représente un détail de réalisation d'un exemple de dispositif de pontage.

### Description détaillée

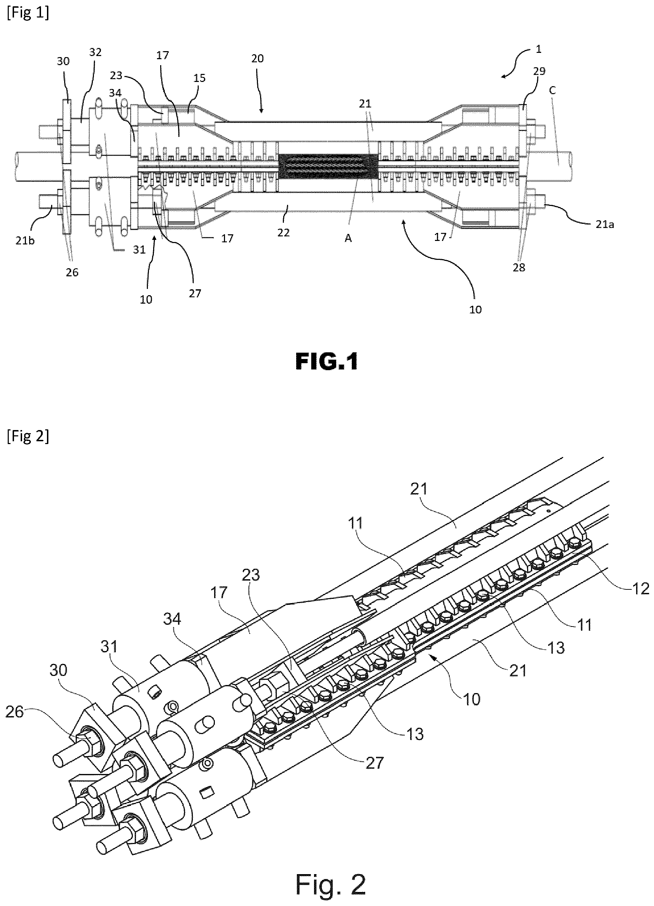

On a représenté sur les figures 1 et 2 un dispositif de pontage 1 conforme à l'invention, destiné à être monté sur un câble de structure C, tel qu'un câble de précontrainte extérieure ou un hauban, pour le détendre localement avant son sectionnement et sa dépose.

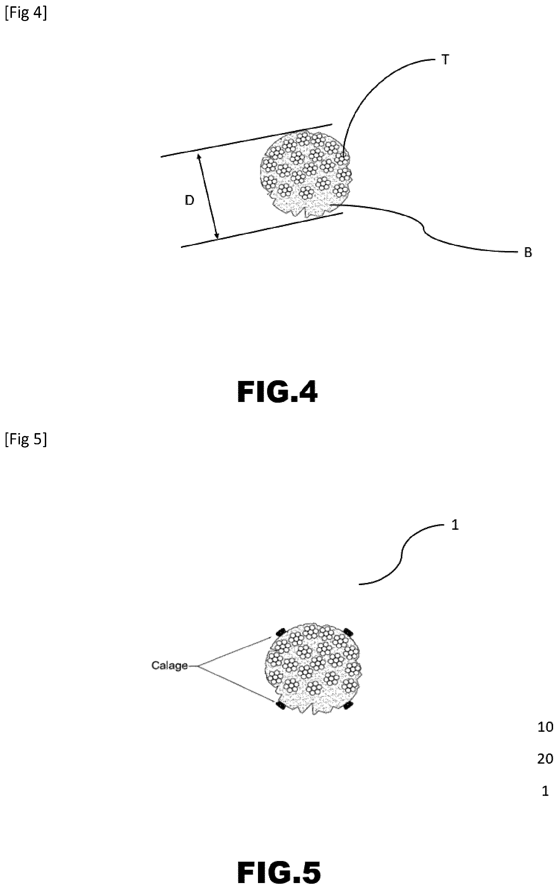

Le câble C comporte, comme visible sur la figure 4, des armatures T noyées dans un matériau cimentaire B, et son diamètre extérieur (sans la gaine) vaut D.

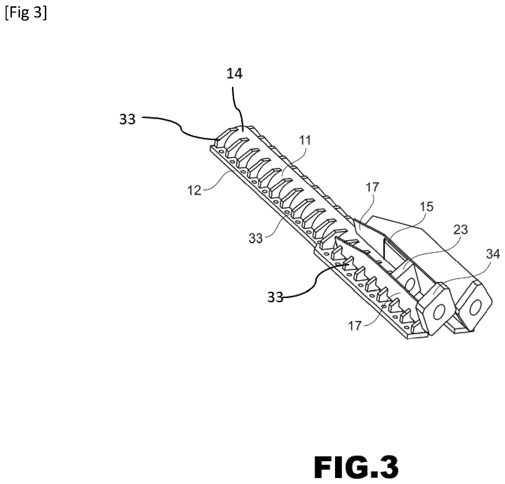

Le dispositif 1 comporte deux colliers 10 (encore appelés « colliers mordaches ») chacun composé de deux demi-colliers 11 (encore appelées « demi-coquilles ») et dont l'une d'elles est représentée isolément à la figure 3.

Chaque demi-collier 11 comporte comme on le voit sur cette figure un corps 14 définissant une cavité sensiblement hémicylindrique (ce corps étant encore appelé « mordache »), ce corps 14 étant allongé selon l'axe longitudinal du câble. Dans l'exemple considéré, le corps 14 présente une forme sensiblement demi-circulaire en section transversale, et il est bordé latéralement sur sensiblement toute sa longueur sur ses côtés opposés par des deux brides respectives 12 s'étendant parallèlement au plan de serrage des colliers 10.

Les brides 12 des deux demi-colliers 11 sont assemblées au moyen d'une succession d'ensembles boulons/écrous 13, dont les serrages assurent le serrage du collier 10 sur le câble.

Chaque demi-collier 11 présente à l'arrière, comme visible sur la figure 3, des renforts longitudinaux 17, sous la forme d'un ensemble de deux couples de nervures rapportées sur le corps 14.

Comme visible plus particulièrement sur la figure 5, les nervures 17 de chaque couple sont parallèles l'une à l'autre et situées de part et d'autre d'un plan médian R orienté radialement, sensiblement à 45° du plan de serrage du collier 10. Le demi-collier 11 présente ainsi une symétrie par rapport à un plan médian perpendiculaire au plan de serrage du collier.

On voit également sur les figures 1 et 2 notamment que chaque demi-collier 11 comporte un ensemble de raidisseurs transversaux 33, se raccordant perpendiculairement aux brides 12 et au corps 14 entre les trous destinés aux boulons 13.

Les brides 12 s'élargissent sur la partie arrière du demi-collier 11, pour maintenir l'axe des trous de passage des boulons 13 hors des nervures 17, quand le demi-collier est observé en vue de dessus, perpendiculairement au plan de serrage.

Comme on peut le voir sur la figure 1 notamment, les colliers 10 définissent entre eux une zone intermédiaire A permettant d'accéder au câble C pour procéder à sa découpe.

Un système de liaison 20 relie les colliers 10 et permet de régler leur écartement, et ainsi de reprendre la tension du câble C.

Ce système de liaison 20 comporte un ensemble d'éléments de traction 21, constitués de préférence de barres, par exemple au nombre de quatre comme illustré, disposées tout autour du câble C. Ces barres 21 peuvent être protégées par des manchons 22, par exemple en PEHD, au moins dans la zone A destinée à la découpe des armatures du câble C.

Ces barres 21 présentent chacune une extrémité filetée 21a engagée à travers un ancrage constitué par une plaque de retenue 29, cette dernière venant en appui axialement sur les renforts 17 du collier 10 situé du côté « passif » du dispositif, c'est-à-dire le collier 10 de droite sur la figure 1.

Des écrous 28 dits « passifs » sont engagés sur chacune des extrémités 21a et viennent en appui chacun sur la plaque de retenue correspondante 29.

L'extrémité opposée 21b de chaque barre 21 est engagée à travers un ancrage constituant palier de reprise 23, fixe relativement au collier 10 situé du côté de l'extrémité dite « active » du dispositif de pontage 1, c'est-à-dire le collier de gauche sur la figure 1, ainsi qu'à travers une plaque d'entraînement 30. Le palier de reprise 23 est formé d'une plaque située entre deux nervures de renfort 17 et fixées à ces dernières, étant de préférence soudée à la fois aux nervures 17 et au corps 14.

Les nervures 17 sont doublées par des plaques 15, situées derrière les paliers 23, pour reprendre une partie des efforts axiaux induits par les paliers 23.

La plaque d'entraînement 30 peut être déplacée dans la direction axiale par un vérin 31, dont le corps est fixe par rapport au collier 10 et la tige de piston 32 mobile avec la plaque 30.

Les vérins 31 sont de préférence des vérins hydrauliques, creux et traversés axialement par les barres 21, et permettent la mise en tension, le réglage et la détension des barres de traction 21, comme cela sera détaillé plus loin.

Le corps de chaque vérin 31 est disposé en appui sur un ancrage du demi-collier 11 correspondant, constitué par une plaque 34. Cette dernière repose axialement sur une paire de nervures 17 correspondante du demi-collier 11, étant de préférence soudée contre leurs extrémités.

Les vérins 31 sont de préférence au même nombre que les barres 21, en l'espèce quatre dans l'exemple considéré, et sont distribués avec un agencement sensiblement symétrique autour de l'axe longitudinal du câble C.

Un écrou 26, dit « écrou outil », est monté sur l'extrémité dite « active » 21b de chaque barre 21, et peut prendre appui sur la plaque d'entraînement 30 correspondante.

Un autre écrou 27, dit « écrou de reprise », est également monté sur la barre 21 et peut prendre appui sur le palier 23. La distance entre plaque d'appui 34 et palier de reprise 23 offre une course axiale suffisante à la barre correspondante 21 pour effectuer des reprises, en tension ou détension, des barres 21. De préférence, cette distance est proche de la course utile des vérins 31. Des transferts de charge sont ainsi possibles entre écrous outil 26 et écrou de reprise 27 pour offrir une course totale de tension, réglage ou détension, multiple de celle des vérins 31.

Le dispositif 1 permet une surveillance de l'effort de traction transitant dans les barres 21.

Chaque vérin 31 est pour ce faire muni d'un capteur de pression ainsi que d'un capteur de déplacement de sa tige de piston. Par ailleurs, chacune des barres 21 peut être munie d'un capteur tel une jauge extenso métrique donnant accès à l'allongement de celle-ci.

En complément, un capteur de déplacement, par exemple optique reposant sur l'utilisation d'un ou plusieurs distancemètres LASER, ou autre, peut être disposé entre les deux colliers 10 ou placé de manière à pouvoir les observer, de préférence du côté opposé à celui prévu pour l'outil de découpe du câble. Ce capteur permet de mesurer la distance entre les deux colliers 10, dans la direction axiale.

Alternativement ou en complément, chacun des colliers 10 peut être muni d'au moins un capteur de déplacement du collier par rapport au segment de câble où il est ancré, tel un comparateur mécanique, destiné à détecter tout glissement de ce collier.

Les vérins 31 présentent de préférence des pistons d'aires égales, et sont de préférence raccordés sur un même circuit hydraulique et commandés en équipression.

### Préparation du câble

Avant d'utiliser le dispositif de pontage 1 selon l'invention, le câble C est préparé en retirant sa gaine extérieure sur des segments de longueur suffisante pour permettre la mise en place des deux colliers 10 de part et d'autre de la zone A ménagée pour sa découpe.

La découpe de cette gaine est effectuée avec les précautions adaptées pour ne pas endommager les armatures T du câble. On opère de préférence des découpes circonférentielles aux extrémités du segment concerné, suivies d'une découpe longitudinale permettant d'ouvrir et de retirer le segment de gaine.

Sur les segments de câble dont la gaine a été retirée et destinés au serrage des colliers 10, le matériau cimentaire est frappé au marteau pour retirer toute épaufrure puis bouchardé au moyen d'une boucharde manuelle ou mécanique selon l'intensité requise, pour donner une rugosité suffisante au matériau cimentaire, comme illustré à la figure 4. Cette opération permet d'éliminer d'éventuelles zones de matériau friable (éléments fragiles et facilement désolidarisés de la masse de matériau cimentaire enveloppant les armatures) et d'assurer une meilleure adhérence avec le matériau de calage injecté autour du câble.

Il y a trois manières d'utiliser le dispositif de pontage selon l'invention.

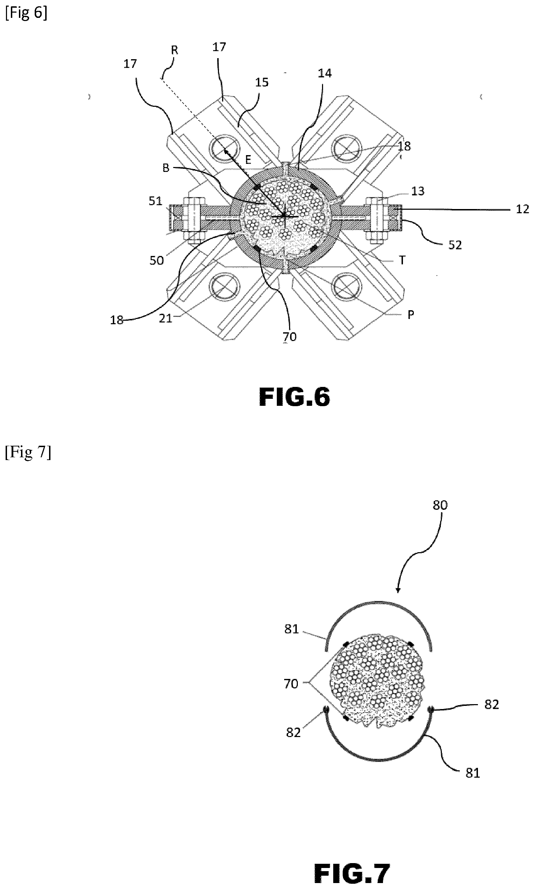

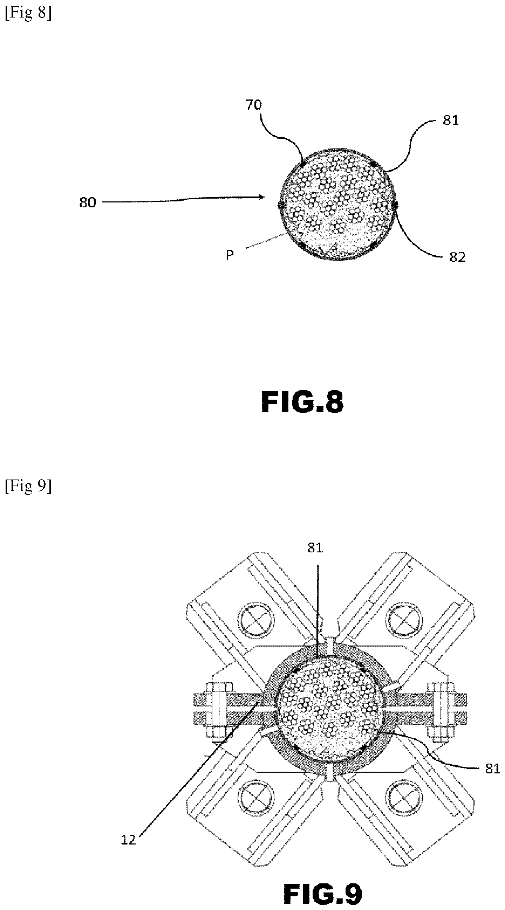

La première correspond à la figure 6, et consiste à utiliser les colliers 10 eux-mêmes comme coffrage pour l'injection du matériau de calage. La deuxième, illustrée sur les figures 7 et 8, repose sur l'utilisation d'un chemisage 80, qui est laissé en place sous les colliers, et la troisième, illustrée sur les figures 9 à 11, repose sur l'utilisation d'un coffrage amovible 90.

Dans tous les cas, dans la zone A ménagée pour la découpe du câble, le matériau cimentaire B est conservé en l'état afin d'éviter d'endommager les armatures T avant découpe.

### Premier exemple de mise en oeuvre

En revenant à la figure 6, selon le premier exemple de mise en oeuvre de l'invention, les quatre demi-colliers 11 sont positionnés de part et d'autre de la zone A ménagée pour la découpe. Les colliers 10 sont maintenus en position avec des supports appropriés en partie basse, complétés par des cales 70, visibles sur les figures 5 et 6. Ces cales permettent que chaque collier 10 soit sensiblement centré autour du câble C, ce centrage étant souhaitable pour la bonne distribution des efforts dans le dispositif de pontage 1.

Ces cales 70 sont de préférence réalisées au préalable avec le même matériau que celui qui sera injecté entre les colliers et le matériau cimentaire B du câble. Des joints 50, de préférence souples, s'interposent entre les brides 12 des colliers, comme on peut le voir sur la figure 6 notamment. Chaque joint 50 s'étend à l'intérieur du collier 10 jusqu'au câble C. Le matériau du joint 50 est par exemple un élastomère ou un matériau compressible tel que du polystyrène ou du contreplaqué.

Des cales rigides 51 peuvent être disposées entre les brides 12, le long de leur bord extérieur, pour régler l'écartement entre les brides 12 avant l'injection du matériau de calage P. Des crapauds 52 peuvent enserrer les brides 12 sur leur bord extérieur, pour les maintenir fixement en l'absence des boulons 13 ou de serrage de ces derniers.

Les joints souples 50 sont interposés entre les demi-colliers 11, et les cales rigides 51 sont ajoutées localement et provisoirement afin de maintenir la distance entre les demi-colliers 11, si nécessaire.

Les demi-colliers 11 sont ainsi maintenus écartés d'une distance appropriée avant serrage, qui est par exemple de 5 à 10mm pour un diamètre de câble C voisin de 100mm.

Les joints 50 permettent également d'éviter que le matériau de calage ne crée un joint rigide, c'est -à-dire un point dur, entre les demi-colliers 11 de chaque ensemble, et que le matériau de calage P, après prise et durcissement, ne constitue un tube qui, par effet de voute (pression circonférentielle) empêcherait un serrage adéquat, c'est-à-dire l'application d'un effort de serrage transversal sur les armatures T et le matériau cimentaire B par les boulons 13 serrés sur le plan de joint des colliers.

Une fois les demi-colliers 11 en place, les boulons 13 peuvent être serrés légèrement.

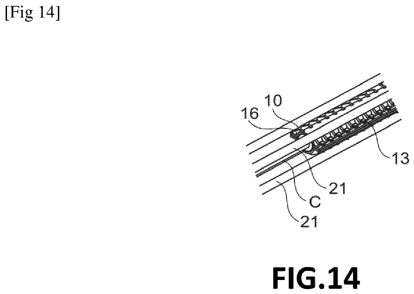

Ensuite, les barres de traction 21 et leurs écrous peuvent être installés, puis on peut vérifier le bon alignement des colliers et des barres de traction. Un complément de calage rigide peut être appliqué si nécessaire. Le dispositif 1 comporte des joues de coffrage annulaires 16 (dont l'une d'elles a été représentée sur la figure 14), pour fermer axialement l'espace entre les colliers 10 et le câble C, et créer un volume sensiblement fermé où le matériau de calage P pourra être injecté. Ces joues 16 sont par exemple des brides annulaires maintenues sur les colliers par vissage ou tout autre moyen de fixation approprié

Chaque demi-collier 11 comporte au moins un orifice 18 servant à l'injection ou d'évent. Cet orifice 18 peut être équipé, le cas échéant, d'un raccord rapide ou fileté, permettant de raccorder un tuyau relié à une pompe pour délivrer le matériau de calage sous pression.

Les joues de coffrage annulaires 16 posées à chacune des extrémités des demi-colliers 11 permettent d'obtenir une fermeture étanche du volume défini entre les demi-colliers 11 et le câble C.

Le matériau de calage P peut être injecté *via* les orifices 18 sous forme fluide dans le volume délimité par chaque demi-collier 11 et le câble C. Grâce à sa fluidité, le matériau de calage P injecté peut remplir le volume de façon optimale et s'immiscer le cas échéant dans les fissures éventuelles du matériau cimentaire B du câble C.

En fonction de la nature du câble C, le matériau de calage P peut être soit un mortier cimentaire soit une résine polymère, faisant prise en solidifiant pour atteindre une résistance adaptée au serrage transversal du collier 10 et aux efforts tangents induits par le pontage.

Lorsque le matériau P a commencé sa prise et présente une tenue suffisante, les joints souples 50 et les éventuelles cales 51 présentes dans l'épaisseur de ce joint 50 peuvent être retirés. Tout surplus de matériau P présent dans cette épaisseur est retiré avant durcissement.

### Deuxième exemple de mise en oeuvre

Dans ce deuxième mode de mise en oeuvre de l'invention, le ou les éléments disposés entre les demi-colliers pour former des volumes étanches pour l'injection du matériau de calage sont laissés en place, et écrasés durant le serrage des colliers.

Sur la figure 7, on a illustré la mise en place d'un chemisage permanent 80 sur le câble, pour réaliser un coffrage servant à l'injection du matériau de calage.

Ce chemisage 80 comporte par exemple deux demi-coquilles 81 métalliques, dont les surfaces extérieure et intérieure sont rugueuses, et des joints longitudinaux 82 permettant d'assurer l'étanchéité à leur jonction, une fois le chemisage en place, comme illustré à la figure 8.

Une fois le matériau de calage durci, chaque collier 10 peut être installé en laissant en place le chemisage 80, comme illustré à la figure 9, le serrage du câble C s'effectuant à travers le chemisage 80.

Dans ce cas, il n'est pas nécessaire de munir les demi-colliers d'orifices 18 servant à l'injection ou d'évent, même s'ils ont été représentés sur cette figure, ni des joues de coffrage précitées.

### Troisième exemple de mise en oeuvre

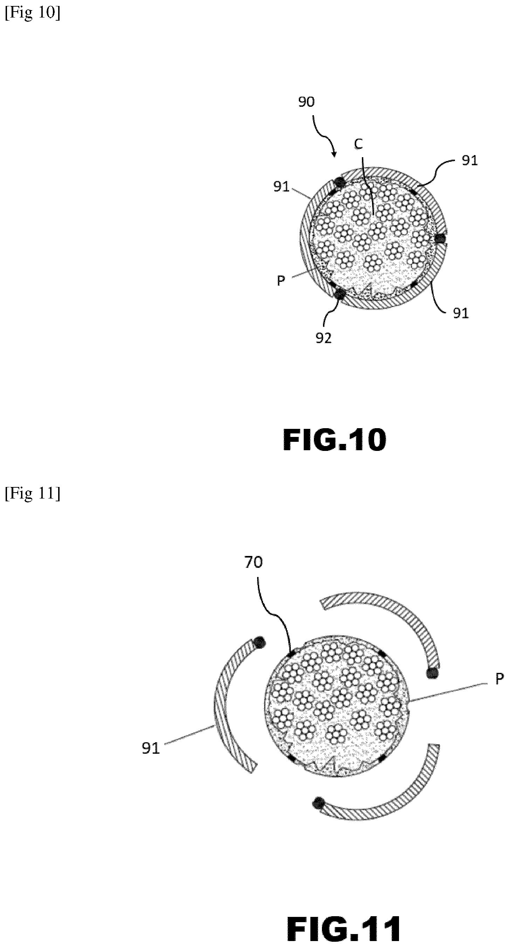

On va maintenant décrire en se référant aux figures 10 à 12 le troisième exemple de mise en oeuvre de l'invention, où l'on utilise un coffrage amovible 90 pour couler le matériau de calage sur chaque segment du câble devant recevoir un collier 10, ce coffrage étant retiré avant la mise en place des colliers 10.

Dans l'exemple considéré, ce coffrage 90 comporte comme illustré à la figure 10 trois secteurs 91 qui font chacun un peu moins de 120° d'extension angulaire et des joints d'étanchéité longitudinaux 92 qui sont disposés entre les secteurs 91.

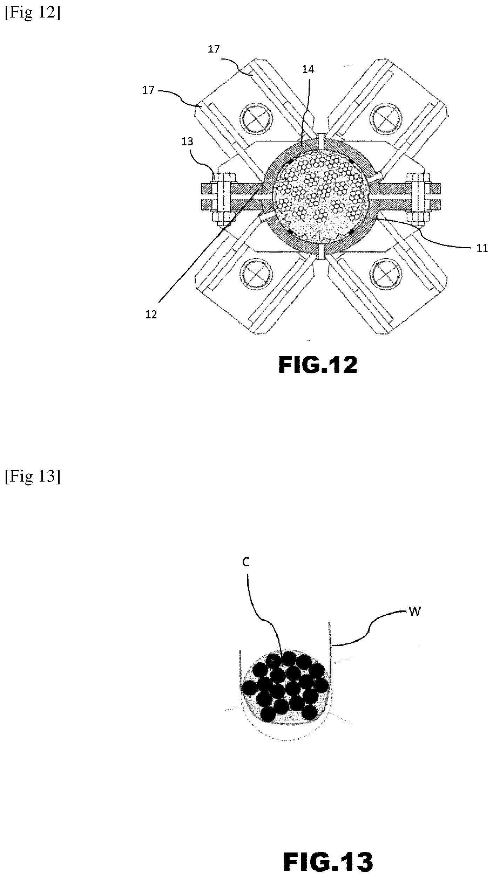

Une fois que le matériau de calage P a durci, on peut procéder à l'enlèvement des secteurs 91, comme illustré à la figure 11, puis à la mise en place des colliers 10 autour du câble dont la surface extérieure a été reconstituée, comme illustré à la figure 12. L'étendue angulaire relativement limitée de chaque secteur 91 facilite l'enlèvement du coffrage sans endommager la surface reconstituée.

Dans ce cas, il n'est pas nécessaire de munir les demi-colliers d'orifices 18 servant à l'injection ou d'évent, même s'ils ont été représentés sur cette figure, ni des joues de coffrage précitées.

Dans les trois exemples ci-dessus, les étapes de serrage des colliers, de détension et de découpe peuvent s'effectuer comme décrit ci-après.

### Serrage des colliers

Des éprouvettes prélevées lors de l'injection du matériau de calage P permettent d'évaluer sa montée en résistance pour garantir une valeur minimale en compression (par exemple 40 MPa pour un matériau de calage cimentaire), avant serrage des boulons 13 des colliers.

Les boulons 13 sont serrés successivement, dans un ordre favorable à une bonne répartition des efforts et de nature à limiter les pertes induites par la non-simultanéité des serrages. Par exemple, on effectue au moins deux passes successives suivant un schéma dit « en quinconce », alternant les deux extrémités du collier et les deux côtés. Le serrage est effectué de préférence au moyen d'une clé hydraulique dont l'effort ou couple de serrage est calibré suivant la note de calcul du collier. La mise en tension des boulons peut alternativement être effectuée au moyen de vérins hydrauliques creux.

La force de serrage FT des demi-colliers, requise pour le non-glissement sous un effort TC, est de préférence comprise entre 1.25xTC et 1.75xTC, tenant compte des coefficients de sécurité, de frottement et de forme pris en compte dans la vérification réglementaire du serrage.

Par exemple, pour reprendre un effort de glissement FS=TC=7226kN, il faut par exemple un effort de serrage de FT=1.69xTC=12206kN. Pour des boulons M30 HR de classe 10.9 (fu=1000MPa, fy=900MPa), tendus à FT1=70%^{∗}1000MPa^{∗}561mm²=392700N, on obtient 393kN d'effort de serrage par boulon. Le serrage transversal minimal FT correspond alors par exemple à 2 rangées symétriques (diamétralement opposées) de 16 boulons HR M30-10.9 (2^{∗}16^{∗}392.6kN=12563kN) ainsi serrés.

On peut estimer théoriquement l'effort de tension régnant dans le câble à détendre en considérant la section totale des armatures (par exemple câble 19T15 soit 19×150mm²), la classe de résistance de celles-ci (par exemple toron en acier à haute limite élastique frg=1860 MPa) et le niveau de mise en tension spécifié lors de l'installation du câble (généralement 70% à 80% de frg pour les armatures T15-1860MPa d'un câble de précontrainte).

Seule une valeur théorique de l'effort régnant dans le câble C à détendre est connue au préalable. Or la connaissance d'une valeur d'effort suffisamment proche de la valeur réelle est requise pour garantir la sécurité de l'opération de découpe et détension du câble. En effet, un écart significatif entre la valeur réelle et la consigne théorique appliquée au dispositif de pontage peut amener des variations rapides (voire brutales) de tension dans les barres de traction 21 du dispositif lors de la découpe des armatures T. Dans le cas le plus défavorable, une valeur d'effort de tension trop largement sous-estimée peut induire lors de la découpe des armatures une variation brutale de tension dans les barres de traction et potentiellement un glissement d'un collier du dispositif.

De préférence, un test préalable de non-glissement des colliers 10 est effectué, pour valider un niveau de sécurité suffisant du dispositif 1 avant découpe et détension du câble. Dans ce but, les barres de traction 21 sont mises en tension à une valeur d'effort supérieure par exemple de 5% à 30% à celle estimée.

Les vérins 31 permettent par exemple de travailler dans une plage de pression limitée à 700 bars. La phase de test peut s'effectuer par paliers successifs avec des incréments de pression de 100 bars ou moins, tenant compte de la pression finale à atteindre.

Pour chaque palier, l'effort est maintenu pendant une durée suffisante pour observer le non-glissement, par exemple 15 minutes pour le premier palier puis 5 minutes pour les suivants. Ces observations sont aidées par le suivi simultané de l'effort total régnant dans les barres de traction 21 d'une part, donné par la pression dans les vérins 31, et du déplacement relatif des deux colliers 10 d'autre part. L'effort maximum peut être maintenu pour une durée plus longue, entre 30 minutes et une heure par exemple, pour valider le test.

Une fois la tenue des colliers 10 testée, l'effort de tension dans les barres 21 est ramenée à la valeur estimée dans le câble C.

### Découpe du câble

La découpe du matériau cimentaire B et des armatures T du câble C est effectuée avec tout moyen qui ne risque pas d'endommager les barres de traction 21.

On préfère un moyen de découpe mécanique par rapport à une découpe par chauffage (chalumeau oxyacétylénique) susceptible d'exposer davantage les barres de traction. On utilise par exemple une scie à fil diamanté W tel qu'illustré sur la figure 13.

Un suivi de l'effort total régnant dans les barres 21 est effectué pendant la découpe des armatures T du câble. Le déplacement relatif des deux colliers 10 est suivi de manière synchrone.

Une variation significative de cet effort après découpe d'une première ou de deux premières armatures T peut donner lieu à une correction à opérer sur la tension des barres de traction 21 : une augmentation de la tension dans ces barres indique que l'effort de tension régnant dans le câble C a été sous-évalué et réciproquement. La correction de tension à apporter est évaluée en rapportant la variation de tension observée dans les barres à la part relative d'armatures coupées, en tenant compte également des raideurs comparées des barres de traction et des armatures du câble.

Le suivi de l'effort dans les barres 21 et celui du déplacement relatif des deux colliers 10 se poursuit pendant toute l'opération de découpe des armatures. Une fois la découpe achevée, le transfert de l'effort de tension du câble dans les barres est complet.

La détension progressive des barres de traction 21 permet alors la détension et la dépose du câble.

Pour des armatures en acier dont le module d'élasticité est voisin de 200GPa et dont la classe de résistance est de 1860MPa, l'allongement typique des armatures est voisin de 7mm/m.

Tenant compte de la longueur libre du câble, l'allongement élastique total à compenser peut représenter plusieurs fois la course des vérins. Les écrous de reprise 27 et les paliers de reprise 23 associés permettent d'effectuer le nombre de reprises requis. Chaque reprise est effectuée avec un chargement des barres 21 sur les écrous outils 26 et les écrous de reprise 27 de manière alternée.

Dans des variantes non illustrées, les barres sont remplacées par d'autres élément relais de traction tel que des câbles (ou des torons) ou des chaines.

Les vérins hydrauliques peuvent être remplacés par des clefs dynamométriques ou par des palans associés à des chaines, quand les capacités requises sont adaptées à ces moyens.

## Revendications

1. Système de pontage destiné à détendre localement un câble de structure (C) avant son sectionnement, comportant un dispositif de pontage (1) comportant :
- Deux colliers (10) à disposer sur ledit câble, chaque collier (10) étant formé de deux demi-colliers (11) aptes à être positionnés autour du câble, chaque demi-collier (11) étant de forme allongée selon l'axe longitudinal du câble et réalisé avec un corps (14) définissant une cavité sensiblement hémicylindrique,
- des éléments de traction (21) s'étendant entre les colliers (10),
- des moyens de réglage (31, 26, 27) de l'effort de traction transitant dans les éléments de traction (21),
système **caractérisé par le fait que** chacun d'au moins deux demi-colliers (11) comporte, de façon monobloc avec celui-ci :
o des renforts longitudinaux (17) s'étendant le long dudit corps (14) sur au moins une partie de la longueur de celui-ci,
o des ancrages (23) s'étendant entre ces renforts longitudinaux (17) et
o des ancrages (29, 34) situés dans la continuité axiale des renforts longitudinaux (17),
la transmission de l'effort des éléments de traction (21) aux colliers (10) s'effectuant *via* lesdits ancrages (23, 29, 34).

2. Système selon la revendication 1, la valeur de l'entre-axe (E) entre l'axe du corps (14) et l'axe de chaque élément de traction (21) étant inférieure ou égale à 2,5 fois le diamètre extérieur (D) du câble hors gaine.

3. Système selon la revendication 1, la valeur de l'entre-axe (E) entre l'axe du corps (14) et l'axe de chaque élément de traction (21) étant inférieure ou égale à 2 fois le diamètre extérieur du câble, plus préférentiellement à 1,5 ou à 1,2 fois le diamètre extérieur du câble.

4. Système selon l'une des revendications 1 à 3, chaque demi-collier (11) comportant deux paires de nervures de renfort longitudinales (17), les nervures de chaque paire étant parallèles entre elles, les nervures de chaque paire étant de préférence orientées à 45° par rapport au plan de serrage du collier (10), le système comportant de préférence des ancrages (23) soudés aux nervures de renfort longitudinales (17), entre celles-ci, de préférence constitués par des plaques (23) soudées au corps (14) et aux nervures (17).

5. Système selon la revendication précédente, les ancrages (23) comportant des plaques d'extrémité (34) servant d'appui à des vérins (31) de mise en tension des éléments de traction, ces plaques d'extrémité (34) étant situées dans le prolongement des nervures (17).

6. Système selon l'une quelconque des revendications précédentes, les éléments de traction du dispositif de pontage comportant des barres de traction (21), les éléments de traction (21) présentant de préférence chacun une contrainte de rupture à fRG supérieure ou égale à 1000 MPa.

7. Système selon la revendication précédente, les éléments de traction du dispositif de pontage comportant quatre barres de traction (21), avec deux barres de traction (21) par demi-collier (11), notamment des barres de traction ayant un diamètre compris entre 50 et 75mm.

8. Système selon la revendications 4 d'une part, et la revendication 6 d'autre part, les ancrages comportant des plaques de reprise (23) s'étendant perpendiculairement à l'axe longitudinal du collier et fixées aux renforts longitudinaux (17), pour servir d'appui à des écrous de reprise (27) montés sur les barres de traction (21), le système comportant de préférence des plaques de doublage (15) s'étendant contre les nervures (17) d'une paire de nervures et entre celles-ci, les plaques de reprise (23) s'étendant au contact de ces plaques de doublage (15).

9. Système selon l'une quelconque des revendications précédentes, comportant des cales (70) pour ménager un espace entre le câble et chaque demi-collier, et l'un au moins des demi-colliers comportant au moins un orifice (18) d'injection d'un matériau de calage (P) autour du câble dans cet espace.

10. Système selon l'une quelconque des revendications précédentes, comportant un chemisage (80) adapté à être mis en place autour du câble à l'intérieur de chaque collier, chaque collier étant configuré pour être serré sur le chemisage sous-jacent, la force de traction exercée par le collier étant transmise au câble *via* ce chemisage, le système comportant de préférence des cales (70) pour ménager un espace entre le câble et le chemisage (80) en vue de l'injection dans cet espace, autour du câble, d'un matériau de calage.

11. Système selon la revendication précédente, le chemisage (80) comportant deux demi-coquilles (81) sensiblement hémicylindriques, et des joints longitudinaux (82) à la jonction entre elles, chaque demi-coquille du chemisage (80) présentant de préférence une surface extérieure rugueuse, étant de préférence métallique.

12. Système selon l'une quelconque des revendications 1 à 9, comportant un coffrage amovible (90) configuré pour être mis en place autour du câble afin d'injecter autour de celui-ci un matériau de calage (P), chaque collier étant adapté à être mis en place sur le câble là où le matériau de calage a été injecté, après retrait du coffrage amovible, le coffrage amovible (90) comportant de préférence des secteurs (91), notamment au nombre de trois, et entre ceux-ci des joints longitudinaux (92).

13. Système selon l'une quelconque des revendications précédentes, chaque demi-collier (11) étant en acier, de préférence en acier ductile de limite élastique fy supérieure à 300 MPa, de préférence de l'acier S355.

14. Système selon l'une quelconque des revendications précédentes, chaque demi-collier (11) étant réalisé sans orifice d'injection (18) et/ou sans évent (18), débouchant sur la surface intérieure du corps (14).

15. Système selon l'une quelconque des revendications précédentes, les moyens de réglage de l'effort de traction comportant des vérins creux (31), la différence entre les diamètres extérieur et intérieur des vérins (31) étant de préférence supérieure ou égale à 180 mm et/ou les vérins (31) ayant de préférence une capacité au moins égale à 60% de la capacité des éléments de traction (21).

16. Système selon l'une quelconque des revendications précédentes, chaque demi-collier (11) comportant des brides de serrage (12) sur les côtés du corps (14).

17. Procédé pour reprendre localement la tension d'un câble de structure en vue de son sectionnement, en utilisant le système (1) selon l'une quelconque des revendications précédentes, comportant les étapes consistant à :
- Préparer la surface du câble, notamment en retirant sa gaine, en retirant les épaufrures et en le bouchardant, puis :
a)
- mettre en place les colliers (10) autour du câble (C),
- injecter un matériau de calage (P) dans les espaces formés entre les colliers et le câble, ou
b)
- mettre en place un chemisage (80) autour du câble (C) au niveau de chaque segment de celui-ci destiné à recevoir un collier de serrage,
- injecter un matériau de calage (P) dans un espace formé entre le chemisage et le câble,
- mettre en place chaque collier autour du chemisage correspondant, ou
c)
- mettre en place un coffrage amovible (90) autour du câble au niveau de chaque segment de celui-ci destiné à recevoir un collier de serrage,
- injecter un matériau de calage dans un espace formé entre le câble et le coffrage,
- retirer le coffrage (90),
- mettre en place chaque collier sur la portion ainsi décoffrée correspondante,
puis mettre sous tension les éléments de traction (21) s'étendant entre les colliers (10) pour reprendre la tension du câble.

18. Procédé selon la revendication précédente, le matériau de calage (P) étant un coulis cimentaire atteignant une résistance minimale en compression fck d'au moins 40 MPa à 2 jours, et de préférence au moins 100 MPa à 28 jours.

19. Procédé de découpe d'un câble de structure, comportant les étapes consistant à :
- détendre localement le câble par la mise en oeuvre du procédé selon l'une quelconque des revendications 17 et 18,
- découper le câble (C) dans la zone détendue.

## Patentansprüche

1. Überbrückungssystem, welches dazu bestimmt ist, ein Strukturseil (C) vor seiner Trennung lokal zu entspannen, und eine Überbrückungsvorrichtung (1) umfasst, welche umfasst:
- zwei Schellen (10), die an dem Seil anzuordnen sind, wobei jede Schelle (10) von zwei Halbschellen (11) gebildet wird, die um das Seil herum positionierbar sind, wobei jede Halbschelle (11) von einer entlang einer Längsachse des Seils lang gestreckten Form ist und mit einem Körper (14) ausgebildet ist, der einen im Wesentlichen halbzylindrischen Hohlraum definiert,
- Zugelemente (21), die sich zwischen den Schellen (10) erstrecken,
- Mittel zur Einstellung (31, 26, 27) der Zugkraft, die über die Zugelemente (21) übertragen wird,
wobei das System **dadurch gekennzeichnet ist, dass** jede von wenigstens zwei Halbschellen (11) umfasst, einstückig mit ihr ausgebildet:
o Längsverstärkungen (17), die sich entlang des Körpers (14) auf wenigstens einem Teil der Länge desselben erstrecken,
o Verankerungen (23), die sich zwischen diesen Längsverstärkungen (17) erstrecken, und
o Verankerungen (29, 34), die in der axialen Fortsetzung der Längsverstärkungen (17) angeordnet sind,
wobei die Übertragung der Kraft der Zugelemente (21) auf die Schellen (10) über diese Verankerungen (23, 29, 34) erfolgt.

2. System nach Anspruch 1, wobei der Wert des Achsabstands (E) zwischen der Achse des Körpers (14) und der Achse jedes Zugelements (21) kleiner oder gleich dem 2,5-Fachen des Außendurchmessers (D) des Seils ohne Mantel ist.

3. System nach Anspruch 1, wobei der Wert des Achsabstands (E) zwischen der Achse des Körpers (14) und der Achse jedes Zugelements (21) kleiner oder gleich dem 2-Fachen des Außendurchmessers des Seils, stärker bevorzugt kleiner oder gleich dem 1,5- oder dem 1,2-Fachen des Außendurchmessers des Seils ist.

4. System nach einem der Ansprüche 1 bis 3, wobei jede Halbschelle (11) zwei Paar längs verlaufende Verstärkungsrippen (17) umfasst, wobei die Rippen jedes Paares parallel zueinander sind, wobei die Rippen jedes Paares vorzugsweise unter 45° bezüglich der Spannebene der Schelle (10) ausgerichtet sind, wobei das System vorzugsweise Verankerungen (23) umfasst, die an die längs verlaufenden Verstärkungsrippen (17) zwischen diesen angeschweißt sind und vorzugsweise aus Platten (23) bestehen, die an den Körper (14) und an die Rippen (17) angeschweißt sind.

5. System nach dem vorhergehenden Anspruch, wobei die Verankerungen (23) Endplatten (34) umfassen, die als Abstützung für Spannzylinder (31) der Zugelemente dienen, wobei sich diese Endplatten (34) in der Verlängerung der Rippen (17) befinden.

6. System nach einem der vorhergehenden Ansprüche, wobei die Zugelemente der Überbrückungsvorrichtung Zugstangen (21) umfassen, wobei die Zugelemente (21) vorzugsweise jeweils eine Bruchspannung fRG aufweisen, die größer oder gleich 1000 MPa ist.

7. System nach dem vorhergehenden Anspruch, wobei die Zugelemente der Überbrückungsvorrichtung vier Zugstangen (21) umfassen, mit zwei Zugstangen (21) pro Halbschelle (11), insbesondere Zugstangen mit einem Durchmesser zwischen 50 und 75 mm.

8. System nach Anspruch 4 einerseits und Anspruch 6 andererseits, wobei die Verankerungen Aufnahmeplatten (23) umfassen, die sich senkrecht zur Längsachse der Schelle erstrecken und an den längs verlaufenden Verstärkungen (17) befestigt sind, um als Abstützung für Aufnahmemuttern (27) zu dienen, die an den Zugstangen (21) angebracht sind, wobei das System vorzugsweise Dublierplatten (15) umfasst, die sich an den Rippen (17) eines Paares von Rippen anliegend und zwischen diesen erstrecken, wobei sich die Aufnahmeplatten (23) in Kontakt mit diesen Dublierplatten (15) erstrecken.

9. System nach einem der vorhergehenden Ansprüche, welches Klötze (70) zum Ausbilden eines Zwischenraumes zwischen dem Seil und jeder Halbschelle umfasst, und wobei wenigstens eine der Halbschellen wenigstens eine Öffnung (18) zur Einspritzung eines Füllmaterials (P) um das Seil herum in diesen Zwischenraum umfasst.

10. System nach einem der vorhergehenden Ansprüche, welches eine Umkleidung (80) umfasst, die dazu eingerichtet ist, um das Seil herum im Inneren jeder Schelle angebracht zu werden, wobei jede Schelle dafür ausgebildet ist, auf die darunterliegende Umkleidung gepresst zu werden, wobei die von der Schelle ausgeübte Zugkraft über diese Umkleidung auf das Seil übertragen wird, wobei das System vorzugsweise Klötze (70) zum Ausbilden eines Zwischenraumes zwischen dem Seil und der Umkleidung (80) umfasst, zum Zwecke der Einspritzung eines Füllmaterials um das Seil herum in diesen Zwischenraum.

11. System nach dem vorhergehenden Anspruch, wobei die Umkleidung (80) zwei im Wesentlichen halbzylinderförmige Halbschalen (81) und Längsdichtungen (82) an der Verbindungsstelle zwischen ihnen umfasst, wobei jede Halbschale der Umkleidung (80) vorzugsweise eine raue Außenfläche aufweist, die vorzugsweise metallisch ist.

12. System nach einem der Ansprüche 1 bis 9, welches eine lösbare Schalung (90) aufweist, die dafür ausgebildet ist, um das Seil herum angebracht zu werden, um ein Füllmaterial (P) um dieses herum einzuspritzen, wobei jede Schelle dazu eingerichtet ist, nach dem Entfernen der lösbaren Schalung auf dem Seil dort angebracht zu werden, wo das Füllmaterial eingespritzt worden ist, wobei die lösbare Schalung (90) vorzugsweise Sektoren (91), deren Anzahl vorzugsweise drei beträgt, und Längsdichtungen (92) zwischen diesen umfasst.

13. System nach einem der vorhergehenden Ansprüche, wobei jede Halbschelle (11) aus Stahl besteht, vorzugsweise aus duktilem Stahl mit einer Elastizitätsgrenze fy, die größer als 300 MPa ist, vorzugsweise aus Stahl S355.

14. System nach einem der vorhergehenden Ansprüche, wobei jede Halbschelle (11) ohne eine Einspritzöffnung (18) und/oder ohne eine Lüftungsöffnung (18) hergestellt ist, die auf der Innenfläche des Körpers (14) mündet.

15. System nach einem der vorhergehenden Ansprüche, wobei die Mittel zur Einstellung der Zugkraft Hohlzylinder (31) umfassen, wobei die Differenz zwischen dem Außen- und dem Innendurchmesser der Zylinder (31) vorzugsweise größer oder gleich 180 mm ist und/oder die Zylinder (31) vorzugsweise eine Nennkraft aufweisen, die mindestens 60 % der Nennkraft der Zugelemente (21) beträgt.

16. System nach einem der vorhergehenden Ansprüche, wobei jede Halbschelle (11) Spannflansche (12) an den Seiten des Körpers (14) umfasst.

17. Verfahren zum lokalen Aufnehmen der Spannung eines Strukturseils im Hinblick auf seine Trennung unter Verwendung des Systems (1) nach einem der vorhergehenden Ansprüche, welches die folgenden Schritte umfasst:
- Vorbereiten der Oberfläche des Seils, insbesondere durch Entfernen seines Mantels, durch Entfernen der Absplitterungen, und indem es gehämmert wird, anschließend:
a)
- Anbringen der Schellen (10) um das Seil (C) herum,
- Einspritzen eines Füllmaterials (P) in die zwischen den Schellen und dem Seil gebildeten Zwischenräume, oder
b)
- Anbringen einer Umkleidung (80) um das Seil (C) herum an jedem Segment desselben, das dazu bestimmt ist, eine Klemmschelle aufzunehmen,
- Einspritzen eines Füllmaterials (P) in einen zwischen der Umkleidung und dem Seil gebildeten Zwischenraum,
- Anbringen jeder Schelle um die entsprechende Umkleidung herum, oder
c)
- Anbringen einer lösbaren Schalung (90) um das Seil herum an jedem Segment desselben, das dazu bestimmt ist, eine Klemmschelle aufzunehmen,
- Einspritzen eines Füllmaterials in einen zwischen dem Seil und der Schalung gebildeten Zwischenraum,
- Entfernen der Schalung (90),
- Anbringen jeder Schelle auf dem entsprechenden, somit entschalten Abschnitt,
danach Spannen der Zugelemente (21), die sich zwischen den Schellen (10) erstrecken, um die Spannung des Seils aufzunehmen.

18. Verfahren nach dem vorhergehenden Anspruch, wobei das Füllmaterial (P) ein Zementbrei ist, der eine minimale Druckfestigkeit fck von mindestens 40 MPa in zwei Tagen und von vorzugsweise mindestens 100 MPa in 28 Tagen erreicht.

19. Verfahren zum Zerschneiden eines Strukturseils, welches die folgenden Schritte umfasst:
- lokales Entspannen des Seils durch die Durchführung des Verfahrens nach einem der Ansprüche 17 und 18,
- Zerschneiden des Seils (C) in dem entspannten Bereich.

## Claims

1. Bridging system intended to locally relax a structural cable (C) before it is severed, having a bridging device (1) having:
- two collars (10) to be disposed on said cable, each collar (10) being formed of two half-collars (11) that are able to be positioned around the cable, each half-collar (11) having an elongate shape along the longitudinal axis of the cable and being made with a body (14) defining a substantially semicylindrical cavity,
- traction elements (21) extending between the collars (10),
- means (31, 26, 27) for setting the traction force passing through the traction elements (21),
said system being **characterized in that** each of at least two half-collars (11) has, in one piece therewith:
o longitudinal reinforcers (17) extending along said body (14) along at least a part of the length thereof,
o anchors (23) extending between these longitudinal reinforcers (17) and
o anchors (29, 34) situated in the axial continuation of the longitudinal reinforcers (17),
the transmission of the force from the traction elements (21) to the collars (10) being effected via said anchors (23, 29, 34).

2. System according to Claim 1, the value of the interaxial distance (E) between the axis of the body (14) and the axis of each traction element (21) being less than or equal to 2.5 times the outside diameter (D) of the cable not including the sheath.

3. System according to Claim 1, the value of the interaxial distance (E) between the axis of the body (14) and the axis of each traction element (21) being less than or equal to two times the outside diameter of the cable, more preferably less than or equal to 1.5 or 1.2 times the outside diameter of the cable.

4. System according to one of Claims 1 to 3, each half-collar (11) comprising two pairs of longitudinal reinforcing ribs (17), the ribs of each pair being parallel to each other, the ribs of each pair preferably being oriented at 45° to the clamping plane of the collar (10), the system preferably having anchors (23) welded to the longitudinal reinforcing ribs (17), between the latter, said anchors preferably being made up of plates (23) welded to the body (14) and to the ribs (17).

5. System according to the preceding claim, the anchors (23) comprising end plates (34) serving as a support for tensioning cylinders (31) of the traction elements, these end plates (34) being situated in the continuation of the ribs (17).

6. System according to any one of the preceding claims, the traction elements of the bridging device comprising traction bars (21), the traction elements (21) each preferably exhibiting a breaking stress fRG greater than or equal to 1000 MPa.

7. System according to the preceding claim, the traction elements of the bridging device comprising four traction bars (21), with two traction bars (21) per half-collar (11), in particular traction bars having a diameter of between 50 and 75 mm.

8. System according to Claim 4 on the one hand, and Claim 6 on the other hand, the anchors comprising take-up plates (23) that extend perpendicularly to the longitudinal axis of the collar and are fixed to the longitudinal reinforcers (17), in order to serve as a support for take-up nuts (27) mounted on the traction bars (21), the system preferably having doubling plates (15) extending against the ribs (17) of one pair of ribs and between the latter, the take-up plates (23) extending in contact with these doubling plates (15).

9. System according to any one of the preceding claims, comprising wedges (70) for creating a space between the cable and each half-collar, and wherein at least one of the half-collars has at least one orifice (18) for injecting a packing material (P) around the cable into this space.

10. System according to any one of the preceding claims, comprising a lining (80) designed to be fitted around the cable inside each collar, each collar being configured to be clamped to the underlying lining, the traction force exerted by the collar being transmitted to the cable *via* this lining, the system preferably having wedges (70) for creating a space between the cable and the lining (80) in order to inject a packing material into this space, around the cable.

11. System according to the preceding claim, the lining (80) having two substantially semicylindrical half-shells (81), and longitudinal seals (82) at the junction therebetween, each half-shell of the lining (80) preferably having a rough outer surface, preferably made of metal.

12. System according to any one of Claims 1 to 9, having a removable casing (90) configured to be fitted around the cable in order to inject a packing material (P) around the latter, each collar being designed to be fitted on the cable at the location where the packing material has been injected, after the removable casing has been removed, the removable casing (90) preferably having sectors (91), in particular three sectors, and longitudinal seals (92) therebetween.

13. System according to any one of the preceding claims, each half-collar (11) being made of steel, preferably of a ductile steel with an elastic limit fy greater than 300 MPa, preferably S355 steel.

14. System according to any one of the preceding claims, each half-collar (11) being produced without an injection orifice (18) and/or without a vent (18), opening onto the inner surface of the body (14).

15. System according to any one of the preceding claims, the means for setting the traction force comprising hollow cylinders (31), the difference between the outside and inside diameters of the cylinders (31) preferably being greater than or equal to 180 mm and/or the cylinders (31) preferably having a capacity at least equal to 60% of the capacity of the traction elements (21) .

16. System according to any one of the preceding claims, each half-collar (11) having clamping flanges (12) on the sides of the body (14).

17. Method for locally taking up the tension of a structural cable in order to sever the latter, using the system (1) according to any one of the preceding claims, comprising the steps of:
- preparing the surface of the cable, in particular by removing the sheath thereof, removing the spalling and roughening said cable, then:
a)
- fitting the collars (10) around the cable (C),
- injecting a packing material (P) into the spaces formed between the collars and the cable, or
b)
- fitting a lining (80) around the cable (C) at each segment thereof that is intended to receive a clamping collar,
- injecting a packing material (P) into a space formed between the lining and the cable,
- fitting each collar around the corresponding lining, or
c)
- fitting a removable coating (90) around the cable at each segment thereof that is intended to receive a clamping collar,
- injecting a packing material into a space formed between the cable and the casing,
- removing the casing (90),
- fitting each collar over the corresponding
portion from which the casing has been removed, then tensioning the traction elements (21) extending between the collars (10) in order to take up the tension of the cable.

18. Method according to the preceding claim, the packing material (P) being a cementitious grout that reaches a minimum compressive strength fck of at least 40 MPa in 2 days, and preferably at least 100 MPa in 28 days.

19. Method for cutting a structural cable, involving the steps of:
- locally relaxing the cable by implementing the method according to either one of Claims 17 and 18,
- cutting the cable (C) in the relaxed zone.
